# EUROPÄISCHE PATENTSCHRIFT

(11) **EP 0 441 846 B1**
(45) Veröffentlichungstag und Bekanntmachung des Hinweises auf die Patenterteilung: **09.03.1994**
(21) Anmeldenummer: 89912395.4
(22) Anmeldetag: 07.11.1989
(51) Int. Cl.: B62D 35/00, B61D 17/02

(54) **VORRICHTUNG ZUM REDUZIEREN DES STRÖMUNGSWIDERSTANDES IM HECKBEREICH EINES FAHRZEUGS, Z.B. EINES STRASSEN-ODER SCHIENENFAHRZEUGS ODER DERGLEICHEN**
DEVICE FOR REDUCING THE DRAG IN THE REAR REGION OF A VEHICLE, E.G. A ROAD OR RAIL VEHICLE OR THE LIKE
DISPOSITIF PERMETTANT DE REDUIRE LA TRAINEE A L'ARRIERE D'UN VEHICULE, PAR EXEMPLE UN VEHICULE ROUTIER OU FERROVIAIRE OU SIMILAIRE

(30) Priorität: 07.11.1988 DE 3837729
(43) Veröffentlichungstag der Anmeldung: 21.08.1991
(73) Patentinhaber: DAIMLER-BENZ AKTIENGESELLSCHAFT, 70567 Stuttgart (DE)
(72) Erfinder: Geropp, Dieter, Prof.Dr., D-5901 Wilnsdorf/Obersdorf (DE)
(74) Vertreter: Wittner, Walter
(86) Internationale Anmeldenummer: DE8900702
(87) Internationale Veröffentlichungsnummer: WO9005084

(56) Entgegenhaltungen:
- DE-A- 1 456 066
- DE-C- 649 343
- FR-A- 916 198
- FR-A- 1 168 556
- US-A- 2 037 942

## Beschreibung

Die Erfindung betrifft eine Vorrichtung zum Reduzieren des Strömungwiderstandes im Heckbereich eines Fahrzeugs, z. B. eines Straßen- oder Schienenfahrzeugs.

Die Entwicklung energiesparender und umweltfreundlicher Fahrzeuge, insbesondere Kraftfahrzeuge für den Straßenverkehr oder schienengebundene Fahrzeuge, erfordert vor allem eine Herabsetzung ihres Strömungswiderstandes. Wie Untersuchungen auf dem Gebiet der Kraftfahrzeugaerodynamik gezeigt haben, können an verschiedenen Bereichen der Fahrzeugaußenhaut großräumige Strömungsablösungen auftreten, wobei intensive Wirkbelbewegungen induziert werden. Derartige physikalische Vorgänge sind mit großen Energiedissipationen verbunden, die wiederum Ursachen der großen Luftwiderstände, aber auch unerwünschter Auftriebskräfte an einem Kraftfahrzeug sind.

Der entscheidende Bereich, bei dem diese unerwünschten Strömungen besonders offensichtlich sind, ist der gesamte Heckbereich eines Fahrzeuges. Es ist bekannt, daß der Größte Anteil des Strömungswiderstandes z. B. eines Kraftfahrzeuges der Druckwiderstand ist, der beispielsweise bei einem modernen Personenkraftwagen mehr als das Sechsfache des Reibungswiderstandsanteils ausmachen kann. Dieser Druckwiderstand wird maßgebend durch das abgelöste, stark verwirbelte Strömungsbegiet, das sog. Totwassergebeit, im Heckbereich des Fahrzeuges bestimmt.

Aus der deutschen Patentschrift Nr. 649 343 ist eine Strömungsbremse für Schnellkraftfahrzeuge bekannt geworden, die vorsieht, daß zur Fahrzeuglängsrichtung ausgeblasene Luft im Heckbereich eines Fahrzeuges abgesaugt wird. Der Verfasser dieser Patentschrift will durch diese Maßnahmen eine Abbremsung des Fahrzeuges erreichen.

Zu dieser vorbezeichneten Patentschrift wurde in der Zeitschrift "Motorkritik", Jahrgang 1941, Seiten 223 ff. unter der Überschrift "Luftwiderstand hilft bremsen" Stellung genommen. Die Stellungnahme führt auf Seite 256 detailliert aus, daß die Betrachtung, die vom Verfasser der Patentschrift seinerzeit vorgenommen wurde unzutreffend sei und erläutert ausführlich, daß
... der Luftwiderstand im Gegenteil vermindert werde, da ja durch das Absaugen eine Art Grenzschichtabsaugung und somit ein längeres Anliegen der Strömung bzw. Verkleinerung der Wirbelschleppe erreicht werde.

Der Erfindung liegt die Ausgabe zugrunde, eine Vorrichtung bei welcher Luft im Heckbereich eines Fahrzeuges ausgeblasen und wieder abgesaugt wird, derartig weiterzubilden, daß efficizient Reduzierung des Gesamtwiderstandes des Fahrzeuges erzielt wird. Diese Aufgabe wird durch den Anspruch 1 gelöst, vorteilhafte Weiterbildungen der Erfindung ergeben sich aus den zugehörigen Unteransprüchen.

Aufgrund des Zusammenwirkens der erfindungsgemäßen Maßnahmen d. h. aufgrund des Zusammenwirkens von tangentialem Grenzschichtausblasen, Coanda-Effekt und Grenzschichtabsaugen kommt es zu einer zumindest teilweisen Unterdrückung des Totwassers im Heckbereich und damit zu einer starken Reduzierung des Strömungswiderstandes des Fahrzeuges.

Unter dem "Coanda-Effekt" ist bekanntlich die Eigenschaft von Fluidstrahlen (Flüssigkeits- oder Gasstrahlen) zu verstehen, sich an in der Nähe befindliche feste Wände anzulegen und daran entlang zu strömen, wobei der Fluidstrahl aus seiner ursprünglichen. Ausbreitungsrichtung abgelenkt wird.

Dieser Coanda-Effekt wird in Verbindung mit einem gezielten Ausblasen von Luft im Bereich der Ablöselinie(n) des Fahrzeughecks, und zwar mit relativ hoher Geschwindigkeit, dazu ausgenutzt, daß sich die Strömung entlang einer gekrümmten Oberfläche anlegt, welche an- oder umströmt wird. Schließlich wird die Luft aus dem Totwassergebiet gezielt wieder abgesaugt, wobei durch diese Maßnahmenkombination der angestrebte Gesamteffekt erreicht wird, d. h. der Bernoullische Gesamtdruck im Heckbereich wird erhöht und in Folge dessen der Druckwiderstand und damit der gesamte Strömungswiderstand in ausreichendem Maße reduziert bzw. minimiert.

Die Geschwindigkeit der ausgeblasenen Luftstrahlen wird ausreichend hoch eingestellt, insbesondere bis ca. 50m/sec., d. h. höher als die Umgebungsgeschwindigkeit, damit der Coanda-Effekt richtig ausgenutzt werden kann. Gefördert werden kann dies dadurch, daß die Luft gemäß Anspruch 6 in einem geregelten bzw. gesteuerten Luftkreislauf geführt wird.

Zur näheren Erläuterung der Erfindung, ihrer weiteren Merkmale und Vorteile dient die beigefügte Beschreibung von Ausführungsbeispielen in Verbindung mit den Zeichnungen.

Dabei zeigt:
- Figuren 1 - 3: jeweils eine schematische Seitenansicht eines PKW-Modelles mit schematischer Darstellung der sog. "Heckablösungen";
- Fig. 4: eine schematische Schnittansicht eines Heckbereiches eines Kraftfahrzeuges, welches mit der Vorrichtung nach der Erfindung gemäß einem ersten Ausführungsbeispiel ausgestattet ist;
und
- Fig. 5: in schematischer Seitenansicht den hinteren Teil eines Stufenheck-PKW, in dessen Heckbereich eine Vorrichtung nach der Erfindung gemäß einem Zweiten Ausrührungsbeispiel angeordnet ist.

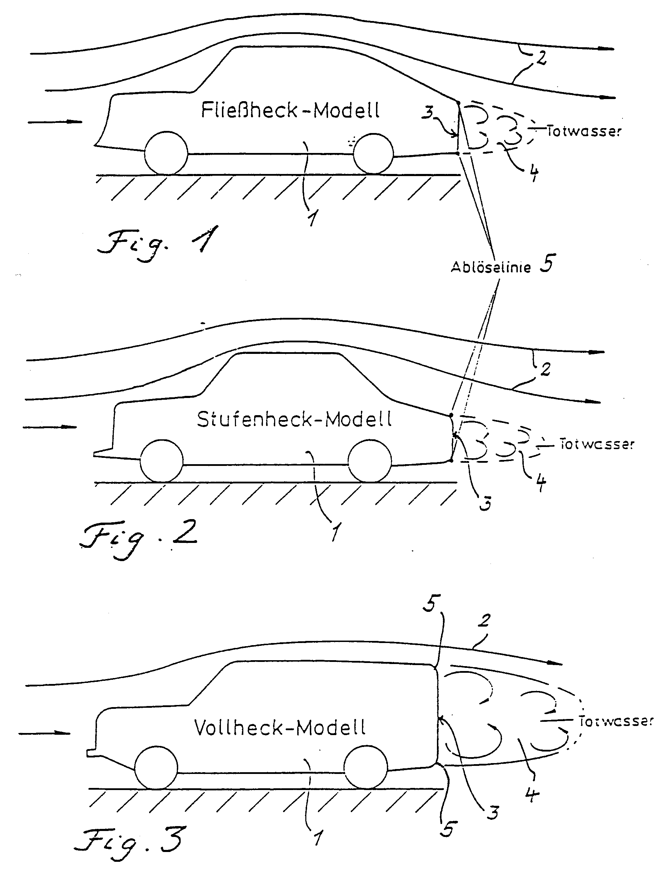

Den schematischen Darstellungen gemäß Fig. 1-3 liegt jeweils die Annahme zugrunde, daß sich ein PKW 1 auf einer Fahrbahn vorwärts bewegt und hierbei einer Außenströmung 2 ausgesetzt ist.

Der PKW 1 gemäß Fig. 1 ist als ein Fließheck-Modell ausgebildet, bei dem insbesondere im Bereich eines Fahrzeughecks 3, d. h. also praktisch hinter diesem Fahrzeugheck 3 ein Totwassergebiet 4 auftritt, d. h. ein stark verwirbeltes Strömungsgebiet im Heckbereich des PKW 1. In ähnlicher Weise zeigt Fig. 2 einen PKW 1 in der Form eines Stufenheck-Modelles, sowie die Fig. 3 einen PKW 1 in der Form eines Vollheck-Modelles, wobei in beiden Fällen ebenfalls im Heckbereich entsprechende Totwassergebeite 4 vorhanden sind.

In allen drei dargestellten Fällen ist dieses Totwassergebiet 4 durch eine über die Ober- und Unterseite sowie die Seitenbereiche des Fanrzeughecks 3 durchgehende Ablöselinie 5 gekennzeichnet, welche den Beginn des Totwassers und der großen Energiedissipation, d. h Umsetzung kinetischer Strömungsenergie in Wärme, definiert. Aufgrund der Ablösung und der Energiedissipation wird der statische Druck im Totwassergebiet 4 nicht weiter ansteigen und nahezu konstant bleiben. In Folge dessen entsteht ein großer Druckwiderstand und damit ein entsprechend großer Strömungswiderstand des jeweiligen Fahrzeuges.

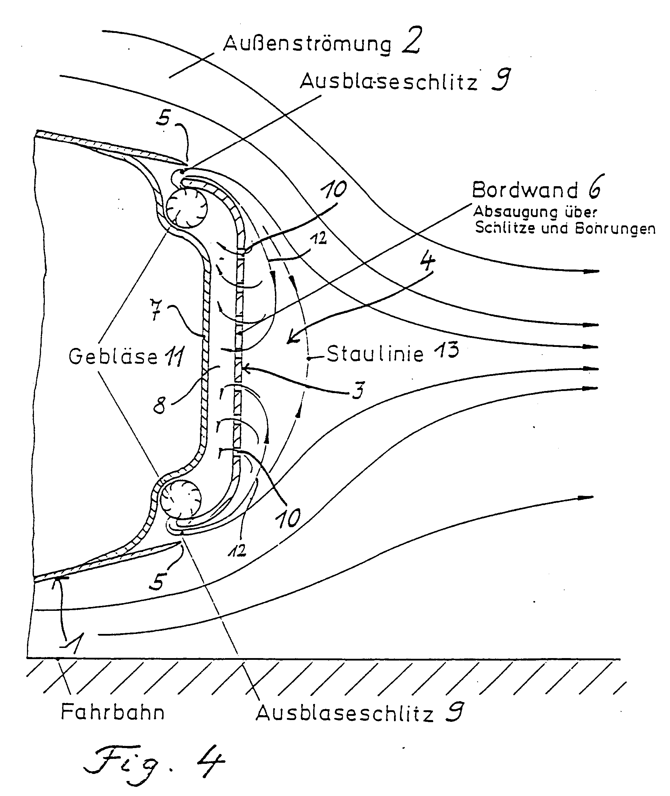

Aus Fig. 4 ist nun schematisch ein Heckbereich eines PKW 1 in Schnittansicht dargestellt, wobei dieser Heckbereich nun eine Vorrichtung zum verstärkten Reduzieren des Druckwiderstandes aufweist.

Bei dieser Vorrichtung sind insbesondere im Bereich von Ablöselinien 5 des Fahrzeugshecks 3 erste Öffnungen 9 in Form von Ausblaseschlitzen angeordnet, die zum Ausblasen von Luft mit hoher Geschwindigkeit dienen, d. h. also zu der sog. Grenzschichtausblasung.

Weiterhin ist eine an das Totwassergebiet 4 angrenzende Außenwand 6 des Fahrzeughecks 3 in der Weise ausgebildet und geformt, daß die ausgeblasene Luft unter Ausnutzung des Coanda-Effekts aus ihrer ursprünglichen Strömungsrichtung in das Totwassergebiet 4 abgelenkt wird, wie durch Pfeile 12 angedeutet. Darüber hinaus sind bei dieser Vorrichtung in der Außenwand 6 des Fahrzeugshecks 3, d. h. also in der Heckbordwand, zweite Öffnungen 10 angeordnet, die zum Absaugen der Luft aus dem Totwassergebiet 4 dienen, d. h. zur sog. Grenzschichtabsaugung.

In bevorzugter Weise sind nun sowohl die ersten Öffnungen 9 als auch die zweiten Öffnungen 10 jeweils in Form von Bohrungen oder Schlitzen oder ähnlich ausgebildet. Im gezeigten Ausführungsbeispiel gemäß Fig. 4 sind die ersten Öffnungen 9 als langgestreckte Ausblaseschlitze ausgebildet, die an oberen und unteren Randbereichen der Heckbordwand 6, d. h. jeweils im Bereich der Ablöselinien 5, angeordnet sind. Die zweiten Öffnungen 9, d. h. die Absaugeöffnungen, sind gemäß Fig. 4 in der Form von Bohrungen oder Löchern ausgebildet, die über die Oberfläche der Heckbordwand 6 verteilt angeordnet sind.

Darüber hinaus sind in einem Zwischenraum 8, der zwischen der Außenwand oder Heckbordwand 6 und einer Innenwand 7 des Fahrzeughecks 3 vorgesehen ist, zwei Gebläse 11, vorzugsweise in der Form von Querstromgebläsen angeordnet, welche für die erforderliche Energiezufuhr sorgen, um das Grenzschichtausblasen und das Grenzschichtabsaugen zu gewährleisten. Diese beiden Gebläse 11 sind in der Nähe der ersten Öffnungen oder Ausblaseschlitze 9 angeordnet und dienen also zum einen zur Förderung der Ausblaseluft durch die ersten Öffnungen 9 hindurch und zum anderen zur Förderung der Absaugeluft durch die zweiten Öffnungen 10 hindurch in das Innere des Zwischenraumes 8.

Die Gebläse 11 in der Form von Querstromgebläsen sind vorzugsweise an die jeweilige Schlitzlänge der ersten Öffnungen oder Ausblaseschlitze 9 angepaßt.

Zum Antrieb dieser Gebläse 11 sind, was der Einfachheit halber in der Fig. 4 nicht dargestellt ist, Elektromotoren vorgesehen, die an das Bordnetz des PKW 1 angeschlossen und vorzugsweise seitlich an Wellen der Gebläse 11 angeflanscht sind.

Bei Inbetriebnahme der Gebläse 11 wird somit durch die ersten Öffnungen oder Ausblaseschlitze 9 im Bereich der Ablöselinien 5 Luft mit hoher Geschwindigkeit von etwa 50m/sec. nach außen ausgeblasen. Hierdurch wird der stark verzögerten Grenzschicht kinetische Energie zugeführt und eine Ablösung zunächst vermieden. Der Druck im Bereich des Fahrzeughecks 3 kann somit weiter ansteigen. Zusätzlich erfährt die aus den Ausblasenschlitzen 9 austretende Luft an dem anschließenden abgerundeten Wandungsbereich der Außenwand oder Heckbordwand 6 unter Ausnutzung des Coanda-Effekts eine Ablenkung aus der ursprünglichen tangentialen Richtung in das Totwassergebiet 4 hinein. In bevorzugter Weise ist das Verhältnis der Höhe jeweils eines Ausblaseschlitzes 9 zum Krümmungsradius des abgerundeten Wandungsabschnittes der Außenwand 6 wesentlich kleiner als 1. Durch diese Coanda-Effekt-Ablenkung wird auch dem Totwassergebiet 4 Energie zugeführt und die gesunde Außenströmung 2 mit hoher kinetischer Energie in den Heckbereich gelenkt. Die von allen Seiten umgelenkten, durch die Ausblasung durch die ersten Öffnungen oder Ausblaseschlitze 9 mit kinetischer Energie angereicherten Strömungen der Ober-, Unterseite sowie der Seitenbereiche des Fahrzeughecks 3 treffen sich in einer Staulinie 13 im Heckbereich, wobei der statische Druck stark ansteigt und somit der Druckwiderstand reduziert wird.

Die Zufuhr von kinetischer Energie durch die Luftausblasung durch sie ersten Öffnungen oder Ausblaseschlitze 9 sowie die Strömungumlenkung aufgrund des Coanda-Effekts wird jetzt noch dadurch verstärkt, daß zusätzlich über die an das Totwassergebiet 4 angrenzende Außenwand oder Heckbordwand 6 Luft durch die dortigen zweiten Öffnungen 10 abgesaugt und in das Innere des Zwischenraumes 8 hingesaugt wird.

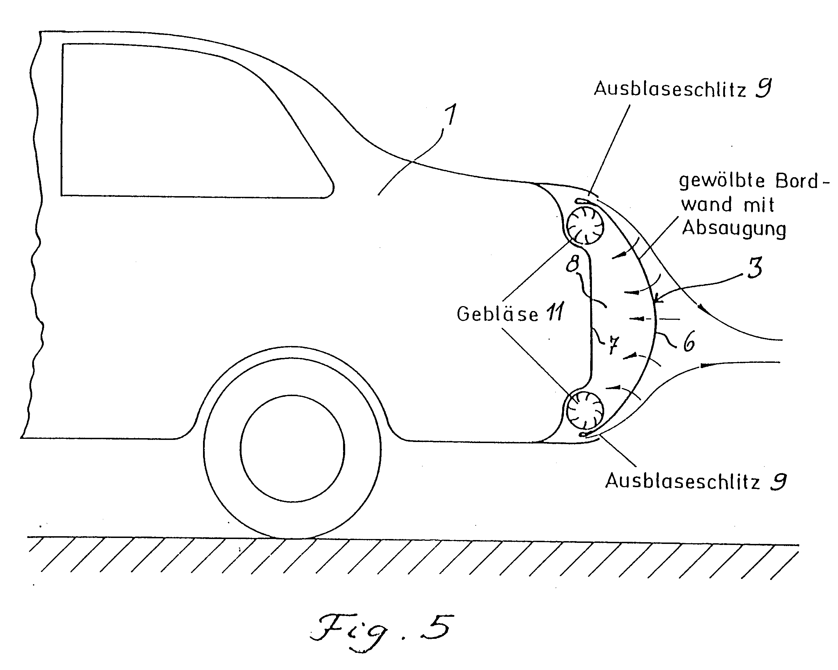

Das aus der Fig. 5 ersichtliche Ausführungsbeispiel einer Vorrichtung zum Reduzieren des Strömungswiderstandes im Heckbereich eines Fahrzeuges ist gegenüber der Ausführung gemäß Fig. 4 insofern abgewandelt, als nunmehr die Außenwand 6 des Fahrzeughecks 3 eines Stufenheck-PKW 1, d. h also die Heckbordwand, in ihrem Bereich, der sich an die oberen bzw. unteren Ausblaseschlitze 9 anschließt, nach außen konvex gekrümmt ist. Durch eine derartige nach außen gewölbte Heckbordwand 6 ergibt sich ein weiterer strömungsgünstiger Effekt, da diese konvexe Krümmung keine so starke Umlenkung der Außenströmung bedingt, wodurch die benötigte Ausblase- und Absaugeleistung und damit die Leistung der Gebläse 11 vermindert werden können. Außerdem kommt eine nach außen gewölbte Heckbordwand einer verbesserten Designgestaltung der Karosserieform im Heckbereich entgegen.

Auch bei dem Ausführungsbeispiel gemäß Fig. 5 sind die im Zwischenraum 8 zwischen der Außenwand 6 und der Innenwand 7 des Fahrzeugshecks angeordneten Gebläse 11 jeweils als Querstromgebläse ausgebildet, die über die gesamten Schlitzlängen der Ausblaseschlitze 9 eingebaut sind und wegen ihrer geringen Querabmessungen und ihrer hohen Druckziffern sehr vorteilhaft sind. Diese praktisch zur Energiezufuhr dienenden Querstromgebläse saugen in der gleichen Weise, wie in Fig. 4 dargestellt, die Luft über Ansaugöffnungen oder - Bohrungen in der konvex gekrümmten Außenwand 6 oder Heckbordwand des Fahrzeughecks 3 an und blasen sodann die Luft durch die beiden Ausblasschlitze 9 im Bereich der Ablöselinien des Fahrzeughecks 3 mit hoher Geschwindigkeit (ca 50m/sec.) aus (Grenzschichtausblasung).

Im Anschluß daran wird aufgrund der nach außen konvex gekrümmten Außenwand 6 des Fahrzeughecks 3 die ausgeblasene Luft unter Ausnutzung des weiter oben erläuterten Coanda-Effekts aus ihrer ursprünglichen Strömungsrichtung in das an die Außenwand 6 angrenzende Totwassergebiet abgelenkt, aus welchem sodann die Luft wieder abgesaugt wird (Grenzschichtabsaugung).

Darüber hinaus besteht noch die Möglichkeit - wie dies in den Zeichnungen im einzelnen nicht dargestellt ist -, zusätzliche Regel- bzw. Steuereinrichtungen vorzusehen, durch welche der Luftkreislauf der mittels der Gabläse 11 ausgeblasenen und abgesaugten Luft geregelt bzw. gesteuert werden kann, wobei insbesondere mit Hilfe derartiger Regeleinrichtungen etwa die Fördermenge der Ausblase- und Absaugeluft geregelt und über entsprechende Einbauten in den ersten Öffnungen 9 (Ausblasöffnungen) und den zweiten Öffnungen 10 (Absaugeöffnungen) so verteilt und gesteuert wird, daß das Totwassergebiet 4 im Heckbereich gezielt beeinflußt werden kann.

Als Alternative zum Antrieb der Gebläse 11 mittels Elektromotoren bietet sich noch die Möglichkeit an, den Gebläseantrieb mittels einer im Kraftfahrzeug eingebauten Abgasturbine zu realisieren, mit welcher sodann das Gebläse gekoppelt ist.

Eine weitere Alternativlösung ist darin zu sehen, daß zur Energiezufuhr, d. h. zur Förderung der Ausblase- und der Absaugeluft anstelle von Gebläsen ein Abgasturbolader unmittelbar mit der Vorrichtung nach der Erfindung gekoppelt wird. Eine derartige Lösung ist insbesondere im Falle von Kraftfahrzeugen mit Heckmotorantrieb naheliegend. Denn bekanntlich muß bei Vollastbetrieb des Motors ein Teil der Turbonutzleistung über ein Bypassventil an die Umgebung abgeben werden, um eine Überbeanspruchung des Motors durch zu hohen Ladedruck zu vermeiden. Der Vollastbetrieb des Motors ist nun aber gerade mit der hohen Fahrgeschwindigkeit des Kraftfahrzeugs identisch, bei der die vorgesehene Strömungsbeeinflussung durch gleichzeitiges Ausblasen und Absaugen und damit die Widerstandsreduzierung am effektivsten sind.

Bei dieser Energiezufuhr muß jedoch in jedem Falle gewährleistet sein, daß die zur Förderung der Ausblase- und Absaugeluft erforderliche Antriebsenergie, d. h. also die in die Vorrichtung nach der Erfindung hineingesteckte Energie geringer ist als die Energieeinsparung in Folge der erzielten Reduzierung des Druckwiderstands im Heckbereich.

Schließlich besteht auch noch die Möglichkeit, daß zur Erzielung eines geregelten bzw. gesteuerten Luftkreislaufs der ausgeblasenen und abgesaugten Luft zusätzlich Luftleitelemente vorgesehen sind, die den ersten Öffnungen 9 (Ausblasöffnungen) und/oder den zweiten Öffnungen 10 (Absaugeöffnungen) zugeordnet sind, wie dies in den Figuren im einzelnen nicht dargestellt ist.

Letztendlich kann auch noch eine weitere Verbesserung des erstrebten Effektes dadurch erzielt werden, daß eine vorgegebene Anzahl von ersten Öffnungen 9 vorgesehen ist, die in der Form von Ausblaseschlitzen ausgebildet sind, insbesondere mit diesen zugeordneten Gebläsen 11, wobei diese Ausblaseschlitze sowohl in vertikaler als auch in horizontaler Richtung angeordnet sind und damit das Fahrzeugheck 3 quasi ringförmig umgeben.

Durch die vorliegende Erfindung werden insbesondere die folgenden Vorteile erzielt:
- Erhebliche Reduzierung des Fahrzeug-Strömungswiderstands;
- Verringerung der Antriebsaggregate des Fahrzeugs;
- keine Änderung der äußeren Karosseriekontur, so daß der Gebrauchsnutzen und die Verkehrstauglichkeit eines Fahrzeugs, beispielsweise eines PKW oder eines LKW, nicht beeinträchtigt werden;
- Möglichkeit zur Nachrüstung von Altfahrzeugen mit der Vorrichtung nach der Erfindung;
- Kraftstoffeinsparung;
- geringere Umweltbelastung.

Im übrigen sind das Verfahren sowie die Vorrichtung nach der Erfindung in erster Linie bei PKW's, LKW's mit Kastenaufbau sowie bei Bussen mit großem Vorteil einsetzbar, darüber hinaus aber auch etwa bei Schienenfahrzeugen, wie z. B. Hochgeschwindigkeitszügen.

Bei allen Fahrzeug-Ausführungen mit "abgeschnittenem Heck" ist die Vorrichtung nach der Erfindung besonders effektiv.

Eine weitere Möglichkeit für einen wirtschaftlichen Einsatz der Grenzschichtbeeinflussung besteht in der Koppelung der erfindungsgemäßen Vorrichtung mit der Lüftungsanlage des Fahrgastraumes oder die Verbindung der Absauge- bzw. Ausblasezonen im Heckbereich mit Orten an der Karosserie, an denen hohe Unter- bzw. Überdrücke auftreten, z. B. im Radkasten.

## Patentansprüche

1. Vorrichtung zum Reduzieren des Strömungswiderstandes im Heckbereich eines Fahrzeugs, z. B. eines Straßen- oder Schienenfahrzeugs, bei welchem in der an das Totwassergebiet (4) angrenzenden Außenwand (6) des Fahrzeughecks (3) Öffnungen (zweite Öffnungen) (10) zum Absaugen der Luft aus dem Totwassergebiet (4) angeordnet sind (Grenzschichtabsaugung)
dadurch gekennzeichnet,
daß zur Erhöhung des Bernoullischen Gesamtdruckes und damit zur verstärkten Reduzierung des Druckwiderstandes im Heckbereich
a) im Bereich der Ablöselinie (5) des Fahrzeughecks (3) Öffnungen (erste Öffnungen) (9), zum tangentialen Ausblasen von Luft zur kinetischen Energieerhöhung der Grenzschicht angeordnet sind, und
b) die an das Totwassergebiet (4) (stark verwirbeltes Strömungsgebiet im Heckbereich) angrenzende Außenwand (6) des Fahrzeughecks (3) in der Weise ausgebildet und geformt ist, daß die ausgeblasene Luft unter Ausnutzung des Coanda-Effekts aus ihrer ursprünglichen Strömungsrichtung in das Totwassergebiet (4) abgelenkt wird.

2. Vorrichtung nach Anspruch 1,
dadurch gekennzeichnet,
daß die Außenwand (6) des Fahrzeughecks (3) d. h die Heckbordwand, in ihrem sich an die ersten Öffnungen (Ausblaseschlitze) (9) anschließenden Bereich nach außen konvex gekrümmt ist.

3. Vorrichtung nach Anspruch 1 oder 2,
dadurch gekennzeichnet,
daß die ersten Öffnungen (9) zum Ausblasen und die zweiten Öffnungen (10) zum Absaugen jeweils in der Form von Bohrungen oder Schlitzen oder dergleichen ausgebildet sind, wobei die ersten Öffnungen (9) vorzugsweise an den Randbereichen der Heckbordwand (6) und die zweiten Öffnungen (10) über die Oberfläche der Heckbordwand (6) verteilt angeordnet sind.

4. Vorrichtung nach einem der Ansprüche 1 - 3,
dadurch gekennzeichnet,
daß zur Energiezufuhr, d. h. einmal zur Förderung der Ausblaseluft durch die ersten Öffnungen (9) und zum anderen zur Förderung der Absaugeluft durch die zweiten Öffnungen (10) wenigstens ein Gebläse (11) vorgesehen ist, das vorzugsweise in einem Zwischenraum (8) zwischen der Außenwand (6) und einer Innenwand (7) des Fahrzeughecks (3), insbesondere in der Nähe der ersten Öffnungen (Ausblaseschlitze) (9) angeordnet ist.

5. Vorrichtung nach Anspruch 4,
dadurch gekennzeichnet,
daß das wenigstens eine Gebläse (11) ein Querstromgebläse ist, welches vorzugsweise an die jeweilige Schlitzlänge der ersten Öffnungen (Ausblaseschlitze) (9) angepaßt ist.

6. Vorrichtung nach einem der Ansprüche 1 - 5,
dadurch gekennzeichnet,
daß zusätzliche Regel- bzw. Steuereinrichtungen zum Regeln bzw. Steuern des Luftkreislaufes der mittels des oder der Gebläse (11) ausgeblasenen und abgesaugten Luft und/oder zum Regeln bzw. Steuern der Fördermenge der ausgeblasenen und abgesaugten Luft und/oder zum Regeln bzw. Steuern der Verteilung der Fördermenge der ausgeblasenen und abgesaugten Luft vorgesehen sind.

7. Vorrichtung nach einem der Ansprüche 4 - 6,
dadurch gekennzeichnet,
daß zum Antrieb des Gebläses oder der Gebläse (11) ein oder mehrere Elektromotoren vorgesehen sind, die an das Bordnetz des Fahrzeuges angeschlossen sind und vorzugsweise seitlich an Wellen des Gebläses oder der Gebläse (11) angeflanscht sind.

8. Vorrichtung nach einem der Ansprüche 4 - 6,
dadurch gekennzeichnet,
daß zum Antrieb des Gebläses oder der Gebläse (11) diese(s) mit wenigstens einer im Fahrzeug eingebauten Abgasturbine gekoppelt ist oder sind.

9. Vorrichtung nach einem der Ansprüche 1 - 3,
dadurch gekennzeichnet,
daß zur Energiezufuhr, d. h. einmal zur Förderung der Ausblaseluft durch die ersten Öffnungen (9) und zum anderen zur Förderung der Absaugeluft durch die zweiten Öffnungen (10) die Vorrichtung mit wenigstens einem im Fahrzeug eingebauten Abgasturbolader gekoppelt ist, insbesondere im Falle eines Kraftfahrzeugs mit Heckmotorantrieb.

10. Vorrichtung nach einem der Ansprüche 1 - 9,
dadurch gekennzeichnet,
daß zur Erzielung eines geregelten bzw. gesteuerten Luftkreislaufs der ausgeblasenen und abgesaugten Luft zusätzlich Luftleitelemente vorgesehen sind, die den ersten Öffnungen (Ausblaseöffnungen) (9) und/oder den zweiten Öffnungen (Absaugeöffnungen) (10) zugeordnet sind.

11. Vorrichtung nach einem der Ansprüche 1 - 10,
dadurch gekennzeichnet,
daß eine vorgegebene Anzahl von ersten Öffnungen (9) vorgesehen ist, die in der Form von Ausblaseschlitzen insbesondere mit jeweils zugeordneten Gebläsen (11), ausgebildet sind, wobei diese Ausblaseschlitze sowohl vertikal als auch horizontal, das Fahrzeugheck (3) quasi ringförmig umgebend, angeordnet sind.

## Claims

1. A device to reduce the current resistance at the rear area of a vehicle such as a road or rail vehicle in which openings (openings) are located in the outer wall (6) of the rear of the vehicle bounding the dead water area (4) to remove by suction the air from the dead water area (4) (boundary layer evacuation),
characterised in that,
in order to increase the total Bernoulli pressure and thus to achieve greater reduction of pressure resistance at the rear of the vehicle
a) openings (first openings) are located in the region of the separation line (5) of the rear (3) of the vehicle for the tangential blowing out of air to increase the kinetic energy of the boundary layer, and
b) the outer wall (6) of the rear (3) of the vehicle bounding the dead water area (4) (area of highly turbulent current at the rear of the vehicle) is designed and formed in such a way that the air blown out is diverted by means of the Coanda effect from its original direction of flow into the dead water area (4).

2. A device in accordance with claim 1,
characterised in that,
the section of outer wall (6) of the rear (3) of the vehicle, i.e. the rear wall, adjoining the first openings (blow-out slits) (9) is curved convexly outwards.

3. A device in accordance with claim 1 or 2,
characterised in that,
the first blow-out openings (9) and the second suction openings (10) are designed in the form of holes or slits or similar outlets, whereby ideally the first openings (9) are distributed over the edges of the rear wall (6) and the second openings (10) over the surface of the rear wall (6).

4. A device in accordance with one of claims 1 - 3,
characterised in that,
at least one blower (11) is fitted to supply the energy, i.e. firstly to propel the blow-out air through the first openings (9) and secondly to propel the suction air through the second openings (10), preferably located in a space (8) between the outer wall (6) and the inner wall (7) at the rear (3) of the vehicle, in particular near to the first openings (blow-out slits) (9).

5. A device in accordance with claim 4,
characterised in that,
at least one blower (11) is a cross current blower, preferably adapted to the slit length of the first openings (9).

6. A device in accordance with one of claims 1 - 5,
characterised in that,
additional regulatory/control devices are fitted to regulate/control the circulation of air blown out and sucked out by means of the blower(s) (11) and/or to regulate/control the volume of the air blown or sucked out and/or to regulate/control the distribution of the air blown or sucked out.

7. A device in accordance with one of claims 4 - 6,
characterised in that,
to drive the blower(s) (11) one or more electric motors are fitted which are connected to the vehicle's 12 V electrical system and preferably are laterally flange-mounted on the blower (11) shafts.

8. A device in accordance with one of claims 4 - 6,
characterised in that,
to drive the blower(s) (11), it (they) is (are) connected to at least one exhaust turbine located in the vehicle.

9. A device in accordance with one of claims 1 - 3,
characterised in that,
to supply the energy, i.e. firstly to propel the air blown out through the first openings (9) and secondly to propel the air sucked out through the second openings (10), the device is connected to at least one turbo charger located in the vehicle, in particular in the case of a vehicle with a rear engine.

10. A device in accordance with one of claims 1 - 9,
characterised in that,
to achieve regulated and controlled circulation of the air blown and sucked out additional air conductors aligned with the first openings (blow-out openings) (9) and/or the second openings (suction openings) (10) are fitted.

11. A device in accordance with one of claims 1 - 10,
characterised in that,
there is a pre-determined number of first openings (9), designed in the form of blow-out slits, notably with allocated blowers (11), whereby these blow-out slits are located both vertically and horizontally almost all around the rear (3) of the vehicle in a ring formation.

## Revendications

1. Dispositif pour réduire la trainée à l'arrière d'un véhicule, par exemple d'un véhicule routier ou d'un véhicule ferroviaire, dans le cas duquel, dans la paroi extérieure (6), jouxtant la zone de fluide mort (4), de l'arrière du véhicule (3) sont disposées des ouvertures (secondes ouvertures) (10) pour aspirer l'air depuis la zone de fluide mort (4)
caractérisé
par le fait que pour accroître la pression totale de Bernouilli et donc pour réduire fortement la résistance de pression à l'arrière
a) au voisinage de la ligne de décollement (5) de l'arrière (3) du véhicule sont disposées des ouvertures (premières ouvertures) (9) pour refouler tangentiellement l'air pour accroître l'énergie cinétique de la couche limite, et
b) la paroi extérieure (6), jouxtant la zone de fluide mort (4) (zone d'écoulement fortement tourbillonnaire à l'arrière) de l'arrière du véhicule (3) est conçue et formée de façon telle que, en utilisant l'effet Coanda, l'air refoulé est dévié de sa direction d'écoulement d'origine pour venir dans la zone de fluide mort (4).

2. Dispositif selon la revendication 1,
caractérisé
par le fait que la paroi extérieure (6) de l'arrière du véhicule (3), c'est-à-dire la paroi arrière extérieure, est courbée, convexe vers l'extérieur, dans sa zone se raccordant aux premières ouvertures (fentes de refoulement) (9).

3. Dispositif selon la revendication 1 ou 2,
caractérisé
par le fait que les premières ouvertures (9), pour le refoulement, et las secondes ouvertures (10), pour l'aspiration, sont, chacune congues sous forme de perçages ou de fentes ou analogues, les premières ouvertures (9) étant de préférence disposées réparties sur les zones de bordure de la paroi arrière extérieure (6) et les secondes ouvertures (10) l'étant le long de la surface de cette paroi arrière extérieure (6).

4. Dispositif salon l'une des revendications 1-3,
caractérisé
par le fait que pour l'apport d'énergie, c'est-à-dire d'une part pour le transport de l'air refoulé par las premières ouvertures (9) et d'autre part pour le transport de l'air aspiré par las secondes ouvertures (10) est prévu au moins un ventilateur (11) qui est de préférence disposé dans un espace intermédiaire (8) entre la paroi extérieurs (6) et une paroi intérieure (7) de l'arrière du véhicule (3), en particulier au voisinage des premières ouvertures (fentes de refoulement) (9).

5. Dispositif selon la revendication 4, caractérisé
par la fait qu'au moins un ventilateur (11) est un ventilateur à courant transversal qui de préférence est adapté à la longueur de fente respective des premières ouvertures (fautes de refoulement) (9).

6. Dispositif selon l'une dos revendications 1-5,
caractérisé
par le fait que sont prévus des dispositifs de régulation et de commande supplémentaires pour réguler ou commander la circulation de l'air refoulé et aspiré au moyen du ou des ventilateurs (11) et/ou pour réguler ou commander le débit de l'air refoulé et aspiré et/ou pour réguler ou commander la répartition du débit de l'air refoulé et aspiré.

7. Dispositif selon l'une des revendications 4-6,
caractérisé
par le fait que pour l'entrainement du ventilateur ou des ventilateurs (11) sont prévus un ou plusieurs moteurs électriques qui sont reliés au réseau électrique de bord du véhicule et, de préférence, sont fixés, sur le côté, par flasque-bride, aux arbres du ventilataur ou des ventilateurs (11).

8. Dispositif selon l'une des revendications 4-6,
caractérisé
par le fait que pour l'entrainement du ventilateur ou des ventilateurs (11) celui-ci (ceux-ci) est (sont) couplé(s) avec au moins une turbine à gaz d'échappement installée dans le véhicule.

9. Dispositif selon l'une des revendications 1-3,
caractérisé
par le fait que pour l'apport d'énergie, c'est-à-dire d'une part pour le transport de l'air refoulé par les premières ouvertures (9) et d'autre part pour le transport de l'air aspiré par les secondes ouvertures (10), la dispositif est couplé avec au moins une turbosoufflante à gaz d' échappement installée dans le véhicule, eu particulier dans le cas d'un véhicule à moteur arrière.

10. Dispositif selon l'une des revendications 1-9,
caractérisé
par le fait que pour obtenir une circulation régulée ou commandée de l'air refoulé et aspiré sont en outre prévus des éléments de guidage de l'air qui correspondent aux premières ouvertures (ouvertures de refoulement) (9) et/ou aux secondes ouvertures (ouvertures d'aspiration) (10).

11. Dispositif selon l'une des revendications 1-10,
caractérisé
par le fait qu'est prévu un nombre prescrit de premières ouvertures (12) qui ont la forme de fentes de refoulement, en particulier avec des ventilateurs (11) correspondant à chacune, ces fentes de refoulement étant disposées aussi bien verticalement qu'horizontalement, en entourant en forme quasi annulaire l'arrière (3) du véhicule.
